# EUROPEAN PATENT APPLICATION

(11) **EP 4 746 144 A1**
(43) Date of publication of application: **20.05.2026**
(21) Application number: 25203916.9
(22) Date of filing: 23.09.2025
(51) Int. Cl.: H01M 50/152, H01M 50/153, H01M 50/55

(54) **SECONDARY BATTERY**

(30) Priority: 07.11.2024 KR 20240156902
(71) Applicant: SAMSUNG SDI CO., LTD., Yongin-si, Gyeonggi-do 17084 (KR)
(72) Inventor: Moon, Dong Sik, 17084 Yongin-si, Gyeonggi-do (KR); Kim, Taewon, 17084 Yongin-si, Gyeonggi-do (KR); Lee, Myongho, 17084 Yongin-si, Gyeonggi-do (KR)
(74) Representative: Meissner Bolte Partnerschaft mbB

(57) **Abstract**

A secondary battery (1) includes an electrode assembly (100) including a first electrode (110), a second electrode (120), a separator (130) between the first electrode (110) and the second electrode (120), a first electrode tab (111) connected to the first electrode (110), and a second electrode tab (121) connected to the second electrode (120), a receiving can (200) accommodating the electrode assembly (100), the receiving can (200) having one opening, and a cap assembly (300) sealing the one opening of the receiving can (200), the cap assembly (300 )including a first electrode terminal (330) connected to the first electrode tab (111) and a second electrode terminal (340) connected to the second electrode tab (121), wherein the cap assembly (300) includes a cap plate (310) including a first terminal hole (311) through which the first electrode terminal (330) is exposed to the outside, and a second terminal hole (312) through which the second electrode terminal (340) is exposed to the outside.

## Description

### BACKGROUND

### 1. Field

The present invention relates to a secondary battery and a method for manufacturing the same.

### 2. Description of Related Art

Recently, as the demand for wearable devices such as headphones, earphones, smart watches, and body-attached medical devices using Bluetooth increases, the demand for secondary batteries with a high energy density and a sufficiently small size is also increasing. Such a secondary battery is manufactured in a form that accommodates an electrode assembly in a circular can of which a height is significantly less than a width depending on characteristics of a usage environment, and may be referred to as a coin cell or a button cell.

The above information disclosed in this background section is for enhancement of understanding of the background of the present disclosure, and therefore, it may contain information that does not constitute related (or prior) art.

### SUMMARY OF THE INVENTION

The invention concerns a secondary battery, including an electrode assembly including a first electrode, a second electrode, a separator between the first electrode and the second electrode, a first electrode tab connected to the first electrode, and a second electrode tab connected to the second electrode, a receiving can accommodating the electrode assembly, the receiving can having one opening, and a cap assembly sealing the one opening of the receiving can, the cap assembly including a first electrode terminal connected to the first electrode tab and a second electrode terminal connected to the second electrode tab, wherein the cap assembly includes a cap plate including a first terminal hole through which the first electrode terminal is exposed to the outside, and a second terminal hole through which the second electrode terminal is exposed to the outside.

The cap assembly may include a cap insulating layer including a first through hole corresponding to the first terminal hole and a second through hole corresponding to the second terminal hole, and may insulate a space between the first electrode terminal and the second electrode terminal and the cap plate, and the first electrode terminal may be exposed through the first terminal hole and the first through hole, and the second electrode terminal may be exposed through the second terminal hole and the second through hole.

The first electrode terminal and the second electrode terminal may be spaced apart from each other.

The first electrode terminal may include a bottom portion connected to the first electrode tab, and a terminal portion protruding from the bottom portion and exposed through the first terminal hole and the first through hole, and wherein the second electrode terminal may include a bottom portion connected to the second electrode tab, and a terminal portion protruding from the bottom portion and exposed through the second terminal hole and the second through hole.

A recessed area having a step around the first through hole and a recessed area having a step around the second through hole may be in the cap insulating layer, a bottom portion of the first electrode terminal may be in contact with the recessed area around the first through hole, and a bottom portion of the second electrode terminal may be in contact with the recessed area around the second through hole.

The receiving can and the cap plate may be electrically insulated from the first electrode and the second electrode.

The receiving can and the cap plate may include a same material.

The receiving can and the cap plate may include a polymer material.

The receiving can and the cap plate may be heat-fusion connected.

The receiving can and the cap plate may include a metal material.

The receiving can and the cap plate may be metal-bonding connected.

The secondary battery may further include a first insulating member disposed to surround a bottom surface and a side surface of an inside of the receiving can.

The second electrode tab may be bent and connected to the second electrode terminal.

The secondary battery may further include a second insulating member insulating the second electrode tab, wherein a bent first side of the second electrode tab may be connected to the second electrode terminal, and wherein a bent second side of the second electrode tab may be insulated from the first electrode by the second insulating member.

The first terminal hole and the second terminal hole may have shapes that are symmetrical to each other.

The first terminal hole and the second terminal hole may have shapes that are axisymmetric to each other.

The cap plate may further include a bridge portion between the first terminal hole and the second terminal hole.

The bridge portion may have a bar shape.

The first electrode terminal may include at least one of steel use stainless and nickel.

The second electrode terminal may include aluminum.

The present invention has been proposed to solve the technical problems noted herein, and embodiments of the present disclosure provide a secondary battery and a method for manufacturing the same for solving the problems noted herein.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 is a perspective view of a secondary battery according to one or more embodiments of the present invention;
FIG. 2 is a view showing the A-A cross-section of FIG. 1.
FIG. 3 is a view showing an upper surface of a cap assembly according to one or more embodiments of the present invention;
FIG. 4 is a view showing a lower surface of a cap assembly according to one or more embodiments of the present invention;
FIG. 5 is a view showing a cap plate according to one or more embodiments of the present invention;
FIG. 6 is a view showing a lower surface of a cap insulating layer according to one or more embodiments of the present invention;
FIG. 7 is a view showing a first electrode terminal and a second electrode terminal according to one or more embodiments of the present invention;
FIG. 8 is a view showing a secondary battery further including a first insulating member according to one or more embodiments of the present invention;
FIG. 9 is a view showing a secondary battery further including a second insulating member according to one or more embodiments of the present invention; and
FIG. 10 is a view showing a method for manufacturing a secondary battery according to another embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

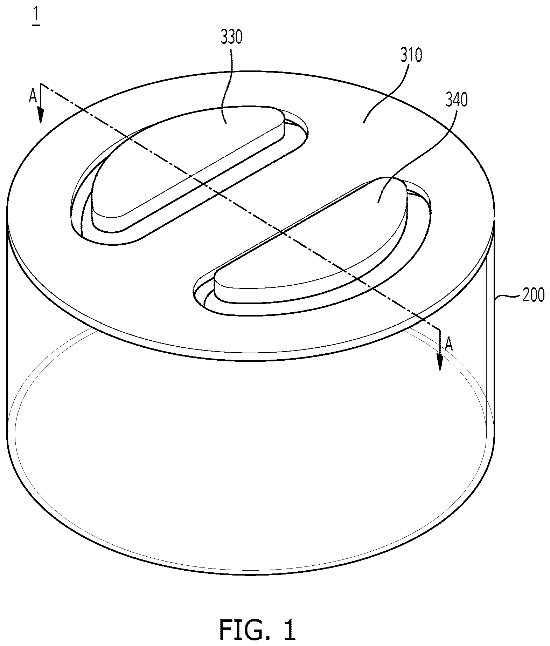

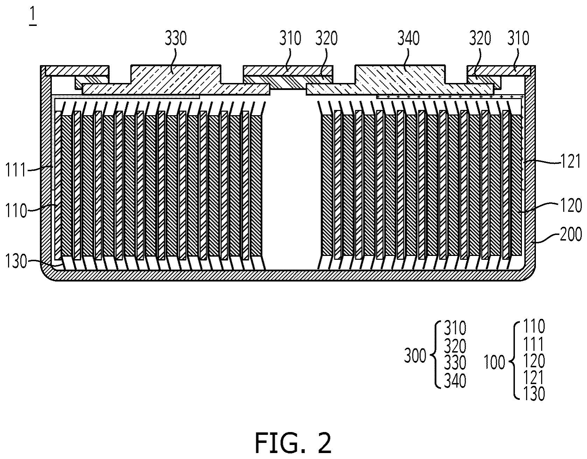

FIG. 1 is a perspective view of a secondary battery according to an embodiment of the present invention. FIG. 2 is a view showing the A-A cross-section of FIG. 1.

A secondary battery 1 according to one or more embodiments is a micro-sized secondary battery and may be a coin cell or a button cell but may be a cylindrical or pin-type battery.

The coin cell or button cell is a battery in the form of a thin coin or button and may refer to a battery having a ratio of height to diameter (height/diameter) of 1 or less but the ratio may vary. Because the coin cell or button cell is generally cylindrical, the cross section in the horizontal direction is generally circular. However, the cross section in the horizontal direction may have an elliptical or polygonal shape. The diameter may refer to a maximum distance in the horizontal direction of the battery, and the height may refer to a maximum distance in the vertical direction of the battery (e.g., distance from the flat bottom surface to the flat top surface of the battery).

Referring to FIGS. 1 and 2, a secondary battery 1 according to one or more embodiments of the present invention includes an electrode assembly 100, a receiving can 200, and a cap assembly 300.

According to one or more embodiments, the secondary battery 1 may be a coin cell or a button cell, but may also be a cylindrical or pin-shaped battery.

The electrode assembly 100 includes a first electrode 110, a second electrode 120, a separator 130, a first electrode tab 111 connected to the first electrode 110, and a second electrode tab 121 connected to the second electrode 120. The first electrode 110 may be a negative electrode, and the second electrode 120 may be a positive electrode. Of course, the opposite is also possible. For example, the electrode assembly 100 may be a winding-type electrode assembly 100 formed by being wound after a separator 130, which is an insulator, is interposed between a first electrode 110 and a second electrode 120, but other scenarios are possible.

According to one or more embodiments, the first electrode 110 may include a coated portion, which is an area where an active material is applied to both surfaces of a first substrate formed of a thin metal plate, and a non-coated portion, which is an area where the substrate is exposed because the active material is not applied. The first electrode 110 may include a non-coated portion formed on both side surfaces of the first substrate in the wound longitudinal direction. The first electrode 110 may form a negative electrode by coating a negative active material such as graphite or carbon on a metal substrate such as copper, copper alloy, nickel or nickel alloy.

According to one or more embodiments, the second electrode 120 may include a coated portion, which is an area where an active material is applied to both surfaces of a second substrate formed of a thin metal plate, and a non-coated portion, which is an area where the substrate is exposed because the active material is not applied. The second electrode 120 may include a non-coated portion formed on both side surfaces of the second substrate in the wound longitudinal direction. The second electrode 120 may form a positive electrode by coating a positive active material such as a transition metal oxide on a metal substrate such as aluminum or an aluminum alloy.

According to one or more embodiments, the separator 130 may be positioned between the first electrode 110 and the second electrode 120. The separator 130 may insulate the first electrode 110 and the second electrode 120 and exchange lithium ions between the first electrode 110 and the second electrode 120. The separator 130 may have a sufficient length to completely insulate a space between the first electrode 110 and the second electrode 120 even if the electrode assembly 100 shrinks or expands during the charging and discharging process of the secondary battery 1.

The first electrode tab 111 may be disposed on the outer surface of the electrode assembly 100. The first electrode tab 111 may be formed separately and connected to the non-coated portion of the first electrode 110, or may be formed by punching out a part of the non-coated portion.

The first electrode tab 111 may be bent on one surface of the electrode assembly 100 facing the cap assembly 300 and connected to the first electrode terminal 330 of the cap assembly 300. The first electrode 110 and the first electrode terminal 330 may be electrically connected through the first electrode tab 111.

The second electrode tab 121 may be disposed on the outer surface of the electrode assembly 100. The second electrode tab 121 may be formed separately and connected to the non-coated portion of the second electrode 120, or may be formed by punching out a part of the non-coated portion.

The second electrode tab 121 may be bent on one surface of the electrode assembly 100 facing the cap assembly 300 and connected to the second electrode terminal 340 of the cap assembly 300. The second electrode 120 and the second electrode terminal 340 may be electrically connected through the second electrode tab 121.

The receiving can 200 has one opening to accommodate the electrode assembly 100. The receiving can 200 may form the overall appearance of the secondary battery 1. For example, the receiving can 200 may have an open cylindrical shape. The receiving can 200 may include a circular bottom surface and a side wall extending vertically from the circumference of the bottom surface. In the receiving can 200, the diameter of the bottom surface may be formed to be larger than the height of the side wall, so that the secondary battery 1 may be configured as a button or coin type battery. In other embodiments, the diameter of the bottom surface of the receiving can 200 may be formed smaller than the height of the side wall.

The upper surface facing the bottom surface of the receiving can 200 may be open to expose an accommodation space capable of receiving an electrode assembly 100. After the electrode assembly 100 is accommodated in the receiving can 200, the electrode assembly 100 may be sealed by covering the one opening of the receiving can 200 with the cap assembly 300. Specifically, the upper end of the side wall of the receiving can 200 may have a step from the outside to the inside. The cap plate 310 of the cap assembly 300 may be joined by performing at least one of heat fusion (e.g., UV curing) or metal bonding (e.g., welding, brazing, soldering, etc.) while in contact with the upper terminal of the side wall of the receiving can 200 so as to engage with the step of the upper terminal of the side wall of the receiving can 200, but other scenarios are possible.

The receiving can 200 may be insulated from the first electrode 110 and the second electrode 120. The receiving can 200 may not be electrically polarized and may not be connected to the first electrode 110, the second electrode 120, the first electrode tab 111, and the second electrode tab 121.

The cap assembly 300 may seal the one opening of the receiving can 200. The cap assembly 300 may cover the one opening of the receiving can 200 to seal the electrode assembly 100 from the outside.

The cap assembly 300 includes a cap plate 310, a cap insulating layer 320, a first electrode terminal 330, and a second electrode terminal 340.

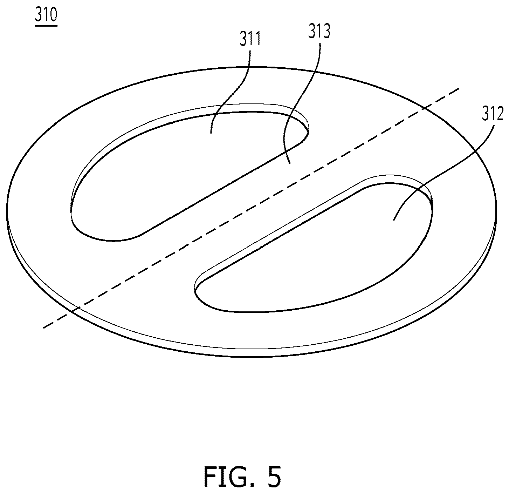

The cap plate 310 may include a first terminal hole 311 (refer to FIG. 5), through which the first electrode terminal 330 is exposed to the outside, and a second terminal hole 312 (refer to FIG. 5), through which the second electrode terminal 340 is exposed to the outside. The first terminal hole 311 and the second terminal hole 312 may be formed in a symmetrical structure in the cap plate 310.

The cap plate 310 may be joined to the upper terminal of the side wall of the receiving can 200. The cap plate 310 may include the same material as the receiving can 200, and depending on the material, may be heat-fused to be joined with the receiving can 200 or metal-bonded with the receiving can 200. As an example, the receiving can 200 and the cap plate 310 may include a polymer material, but any material that is a high-strength, heat-resistant, chemical-resistant non-metallic material may be applied. The receiving can 200 and the cap plate 310 may include a polymer material and may be joined by heat fusion. In another embodiment, the receiving can 200 and cap plate 310 may include a metal material. For example, the metal material may include metal materials such as steel use stainless (SUS), aluminum, an aluminum alloy, or nickel-plated steel, but other examples are possible. The receiving can 200 and the cap plate 310 may include a metal material and may be joined by metal bonding.

The cap plate 310 may be insulated from the first electrode 110 and the second electrode 120. The receiving can 200 may be insulated from the first electrode 110, the second electrode 120, the first electrode tab 111, and the second electrode tab 121, and thus may not have electrical polarity.

The cap insulating layer 320 may be disposed on one surface (e.g., the lower surface) of the cap plate 310 to insulate the first electrode terminal 330 and the second electrode terminal 340 from the cap plate 310.

The first electrode terminal 330 may be connected to the first electrode tab 111. The first electrode terminal 330 may be exposed to the outside through the first terminal hole 311 (see FIG. 5) of the cap plate 310. The first electrode terminal 330 may be exposed through the first terminal hole 311 of the cap plate 310. The first electrode terminal 330 may be spaced apart from the first terminal hole 311 of the cap plate 310 and may not be in contact with the cap plate 310.

The second electrode terminal 340 may be connected to the second electrode tab 121. The second electrode terminal 340 may be exposed to the outside through the second terminal hole 312 (see FIG. 5) of the cap plate 310. The second electrode terminal 340 may be exposed through the second terminal hole 312 of the cap plate 310. The second electrode terminal 340 may be spaced apart from the second terminal hole 312 of the cap plate 310 and may not be in contact with the cap plate 310.

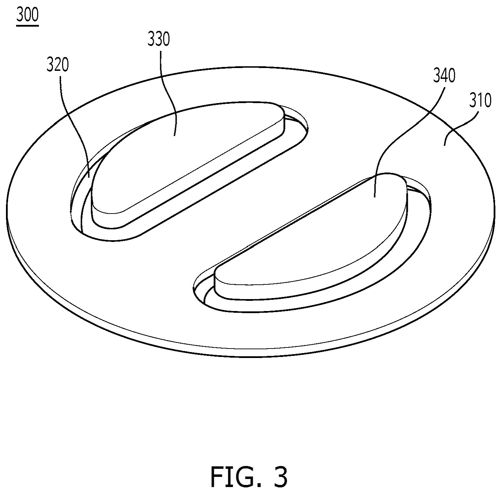

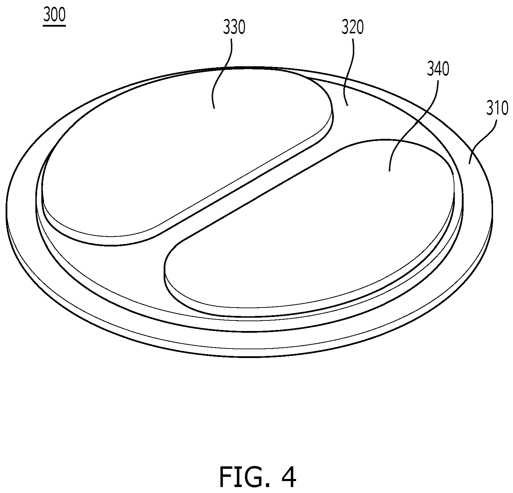

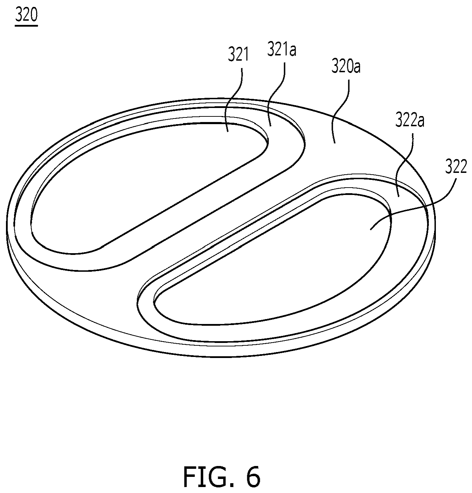

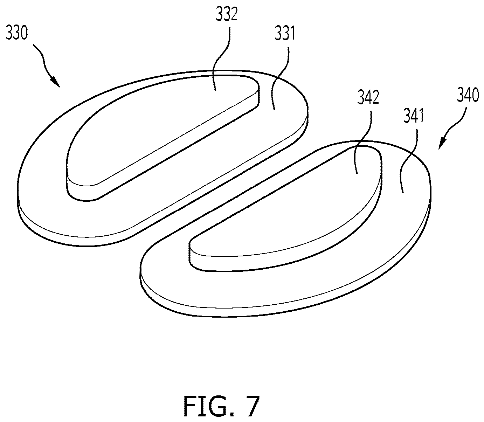

FIG. 3 is a view showing an upper surface of a cap assembly according to an embodiment of the present invention. FIG. 4 is a view showing a lower surface of a cap assembly according to an embodiment of the present invention. FIG. 5 is a view showing a cap plate according to an embodiment of the present invention. FIG. 6 is a view showing a lower surface of a cap insulating layer according to an embodiment of the present invention. FIG. 7 is a view showing a first electrode terminal and a second electrode terminal according to an embodiment of the present invention.

Referring to FIGS. 3 to 7, a cap assembly 300 according to one or more embodiments of the present invention includes a cap plate 310, a cap insulating layer 320, a first electrode terminal 330, and a second electrode terminal 340.

The cap plate 310 may be disposed on the cap insulating layer 320. The cap plate 310 may be joined with the receiving can 200 while covering one opening of the receiving can 200. The first electrode terminal 330 may be exposed to the outside through the first terminal hole 311 formed in the cap plate 310. The second electrode terminal 340 may be exposed through the second terminal hole 312 formed in the cap plate 310. The cap insulating layer 320 may be disposed between the cap plate 310 and the first electrode terminal 330 and the second electrode terminal 340. The cap insulating layer 320 may insulate a space between the cap plate 310 and the first electrode terminal 330, and a space between the cap plate 310 and the second electrode terminal 340.

As illustrated in FIG. 5, the cap plate 310 includes a first terminal hole 311 through which a first electrode terminal 330 is exposed to the outside, and a second terminal hole 312 through which a second electrode terminal 340 is exposed to the outside.

The first terminal hole 311 and the second terminal hole 312 may have shapes that are symmetrical to each other. The first terminal hole 311 and the second terminal hole 312 may have shapes that are axisymmetrical to each other.

The cap plate 310 may further include a bridge portion 313 formed between the first terminal hole 311 and the second terminal hole 312. The bridge portion 313 may be formed in a bar shape. The first terminal hole 311 and the second terminal hole 312 may have shapes that are symmetrical to each other with respect to the bridge portion 313.

As illustrated in FIG. 6, the cap insulating layer 320 includes a first through hole 321 corresponding to (e.g., aligned with) the first terminal hole 311 and a second through hole 322 corresponding to the second terminal hole 312. Recessed areas 321a and 322a having a step may be formed respectively around the first through hole 321 and around the second through hole 322 on the lower surface of the cap insulating layer 320.

The recessed area 321a formed around the first through hole 321 may be contacted by the bottom portion 331 of the first electrode terminal 330. For example, the bottom portion 331 of the first electrode terminal 330 may be fitted and fixed into a recessed area 321a formed around the first through hole 321. The recessed area 322a formed around the second through hole 322 may come into contact with the bottom portion 341 of the second electrode terminal 340. For example, the bottom portion 341 of the second electrode terminal 340 may be fitted and fixed into a recessed area 322a formed around the second through hole 322.

An adhesive member may be applied to the recessed areas 321a and 322a so that the bottom portion 331 of the first electrode terminal 330 and the bottom portion 331 of the second electrode terminal, which are in contact with each other, may be fixed, but other examples are possible.

As illustrated in FIG. 7, the first electrode terminal 330 and the second electrode terminal 340 may have a symmetrical structure.

The first electrode terminal 330 may include a bottom portion 331 connected to the first electrode tab 111 (refer to FIG. 2), and a terminal portion 332 protruding from the bottom portion 331 and exposed through the first terminal hole 311 and the first through hole 321. The lower surface of the bottom portion 331 of the first electrode terminal 330 may be connected to the first electrode tab 111. A part of the upper surface and the side surface of the bottom portion 331 of the first electrode terminal 330 may be in contact with a recessed area 321a formed around the first through hole 321. The terminal portion 332 of the first electrode terminal 330 may be connected to an external device (e.g., a battery protection module).

The second electrode terminal 340 may include a bottom portion 341 connected to a second electrode tab 121 (refer to FIG. 2), and a terminal portion 342 protruding from the bottom portion 341 and exposed through the second terminal hole 312 and the second through hole 322. The lower surface of the bottom portion 341 of the second electrode terminal 340 may be connected to the second electrode tab 121. A part of the upper surface and the side surface of the bottom portion 341 of the second electrode terminal 340 may be in contact with a recessed area 322a formed around the second through hole 322. The terminal portion 342 of the second electrode terminal 340 may be connected to an external device (e.g., a battery protection module).

The first electrode terminal 330 may include at least one of steel use stainless (SUS) and Ni. The second electrode terminal 340 may include Al. However, when the first electrode 110 is a positive electrode and the second electrode 120 is a negative electrode, the first electrode terminal 330 may include Al, and the second electrode terminal 340 may include at least one of stainless steel (e.g., stainless use steal or SUS) and Ni.

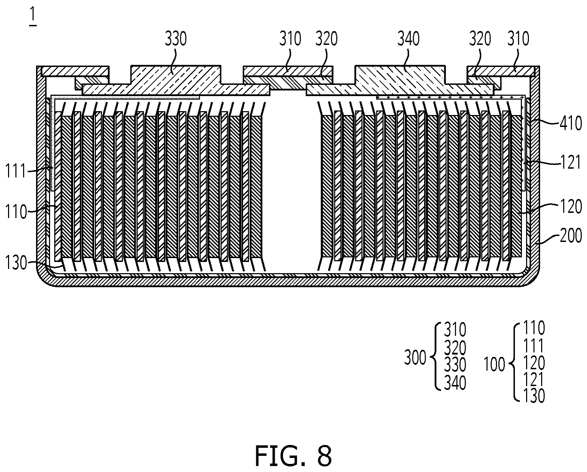

FIG. 8 is a view showing a secondary battery further including a first insulating member according to an embodiment of the present invention. Hereinafter, the secondary battery illustrated in FIG. 8 will be described focusing on the differences from the secondary battery illustrated in FIG. 2, and the description of the configurations corresponding to the secondary battery illustrated in FIG. 2 will be omitted.

Referring to FIG. 8, the receiving can 200 and the cap plate 310 may be welded and connected by including a metal material. For example, when an electrode assembly 100 is accommodated inside a receiving can 200 made of a metal material, a short circuit phenomenon may occur while the first electrode 110 or the second electrode 120 comes in contact with the receiving can 200.

To prevent this, as illustrated in FIG. 8, a secondary battery 1 according to one or more embodiments of the invention further includes a first insulating member 410 disposed to surround the bottom surface and the side surface of the inner portion of the receiving can 200. The first insulating member 410 may be interposed between the electrode assembly 100 and the receiving can 200 to insulate a space between the electrode assembly 100 and the receiving can 200.

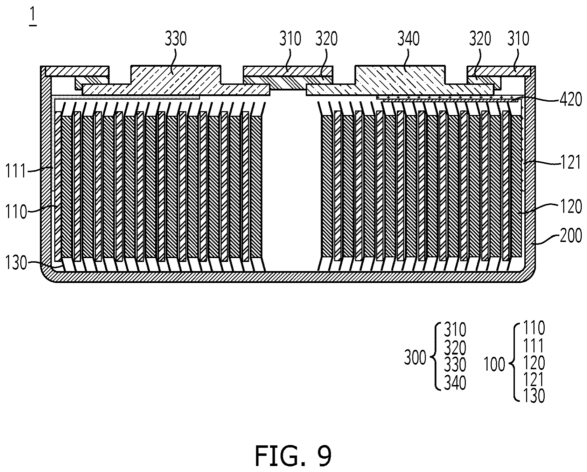

FIG. 9 is a view showing a secondary battery further including a second insulating member according to an embodiment of the present invention. Hereinafter, the secondary battery illustrated in FIG. 9 will be described focusing on the differences from the secondary battery illustrated in FIG. 2, and the description of the configurations corresponding to the secondary battery illustrated in FIG. 2 will be omitted.

Referring to FIG. 9, when the first electrode 110 of the electrode assembly 100 is a negative electrode, and the second electrode 120 is a positive electrode, the first electrode 110 may be formed longer in the winding axis direction than the second electrode 120. When the second electrode tab 121 is bent on one surface of the electrode assembly 100 and connected to the second electrode terminal 340, a short circuit may occur when the first electrode 110 formed longer than the second electrode 120 comes in contact with the first electrode tab 111.

To prevent this, as illustrated in FIG. 9, the secondary battery 1 according to one or more embodiments of the invention further includes a second insulating member 420 that insulates the second electrode tab 121. The bent one surface of the second electrode tab 121 may be connected to the second electrode terminal 340, and the other bent surface of the second electrode tab 121 may be insulated from the first electrode 110 by the second insulating member 420. That is, the second insulating member 420 may be disposed on one surface of the second electrode tab 121 to insulate a space between the second electrode tab 121 and the first electrode 110.

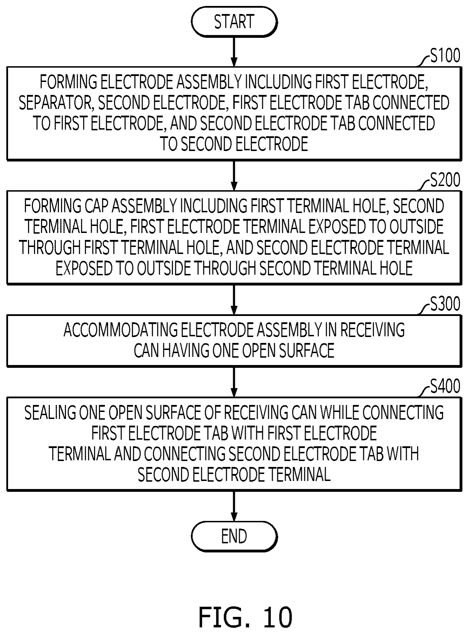

FIG. 10 is a view showing a method for manufacturing a secondary battery according to another embodiment of the present invention.

Referring to FIG. 10, a method for manufacturing a secondary battery according to one or more embodiments of the present invention includes a step S 100 of forming an electrode assembly including a first electrode, a separator, a second electrode, a first electrode tab connected to the first electrode, and a second electrode tab connected to the second electrode, a step S200 of forming a cap assembly including a first terminal hole, a second terminal hole, a first electrode terminal exposed to the outside through the first terminal hole, and a second electrode terminal exposed to the outside through the second terminal hole, and a step S300 of accommodating the electrode assembly in a receiving can having one open surface. The method for manufacturing a secondary battery further includes a step S400 of sealing the one open surface of the receiving can with a cap assembly while connecting a first electrode tab with a first electrode terminal, and connecting a second electrode tab with a second electrode terminal. Hereinafter, steps S100 to S400 will be specifically described with reference to FIGS. 1 to 7.

In step S100, an electrode assembly 100 including a first electrode 110, a separator 130, a second electrode 120, a first electrode tab 111 connected to the first electrode 110, and a second electrode tab 121 connected to the second electrode may be formed. The first electrode 110 may be a negative electrode, and the second electrode 120 may be a positive electrode. Of course, the opposite is also possible. For example, the electrode assembly 100 may be a wound electrode assembly 100 formed by winding after a separator 130, which is an insulator, is interposed between a first electrode 110 and a second electrode 120, but other examples are possible.

In step S200, a cap assembly 300, which includes a first terminal hole 311, a second terminal hole 312, a first electrode terminal 330 exposed to the outside through the first terminal hole 311, and a second electrode terminal 340 exposed to the outside through the second terminal hole 312, may be formed.

The cap assembly 300 may include a cap plate 310, a cap insulating layer 320, a first electrode terminal 330, and a second electrode terminal 340.

The cap plate 310 may include a first terminal hole 311, through which a first electrode terminal 330 is exposed to the outside, and a second terminal hole 312, through which a second electrode terminal 340 is exposed to the outside.

The first terminal hole 311 and the second terminal hole 312 may have shapes that are symmetrical to each other. The first terminal hole 311 and the second terminal hole 312 may have shapes that are axisymmetrical to each other.

The cap plate 310 may further include a bridge portion formed between the first terminal hole 311 and the second terminal hole 312. The bridge portion 313 may be formed in a bar shape. The first terminal hole 311 and the second terminal hole 312 may have shapes that are symmetrical to each other (e.g., mirror images with respect to the bridge portion 313).

The cap plate 310 may include the same material as the receiving can 200. As an example, the cap plate 310 may include a polymer material, but any material that is a high-strength, heat-resistant, chemical-resistant non-metallic material may be applied. In another embodiment, the cap plate 310 may include a metal material. For example, the metal material may include steel use stainless (SUS), aluminum, aluminum alloy, or nickel-plated steel.

The cap insulating layer 320 may be disposed on one surface (e.g., the lower surface) of the cap plate 310 to insulate the first electrode terminal 330 and the second electrode terminal 340 from the cap plate 310.

The cap insulating layer 320 may include a first through hole 321 corresponding to the first terminal hole 311 and a second through hole 322 corresponding to the second terminal hole 312. A recessed area 321a or 322a having a step may be formed around the first through hole 321 and around the second through hole 322 on the lower surface of the cap insulating layer 320.

The recessed area 321a formed around the first through hole 321 may be contacted by the bottom portion 331 of the first electrode terminal 330. For example, the bottom portion 331 of the first electrode terminal 330 may be fitted and fixed into a recessed area 321a formed around the first through hole 321. The recessed area 322a formed around the second through hole 322 may come into contact with the bottom portion 341 of the second electrode terminal 340 . For example, the bottom portion 341 of the second electrode terminal 340 may be fitted and fixed into a recessed area 322a formed around the second through hole 322.

An adhesive member may be applied to the recessed areas 321a and 322a so that the bottom portion 331 of the first electrode terminal 330 and the bottom portion 331 of the second electrode terminal, which are in contact with each other, may be fixed, but other examples are possible.

The first electrode terminal 330 may be exposed to the outside through the first terminal hole 311 of the cap plate 310. The first electrode terminal 330 may be exposed through the first terminal hole 311 of the cap plate 310. The first electrode terminal 330 may be spaced apart from the first terminal hole of the cap plate 310 and may not be in contact with the cap plate 310.

The second electrode terminal 340 may be exposed to the outside through the second terminal hole 312 of the cap plate 310. The second electrode terminal 340 may be exposed through the second terminal hole 312 of the cap plate 310. The second electrode terminal 340 may be spaced apart from the second terminal hole 312 of the cap plate 310 and may not be in contact with the cap plate 310.

In step S300, the electrode assembly 100 may be accommodated in a receiving can 200 with one opening. The receiving can 200 may include the same material as the cap plate 310. As an example, the receiving can 200 may include a polymer material, but any material that is a high-strength, heat-resistant, chemical-resistant non-metallic material may be applied. In another embodiment, the receiving can 200 may include a metal material. For example, the metal material may include metal materials such as steel use stainless (SUS), aluminum, aluminum alloy, or nickel-plated steel.

In step S400, the first electrode tab 111 and the first electrode terminal 330 are connected, and the second electrode tab 121 and the second electrode terminal 340 are connected, while sealing the one opening of the receiving can 200 with the cap assembly 300.

The first electrode tab 111 may be bent on one surface of the electrode assembly 100 facing the cap assembly 300 and connected to the first electrode terminal 330 of the cap assembly 300. The first electrode 110 and the first electrode terminal 330 may be electrically connected through the first electrode tab 111.

The second electrode tab 121 may be bent on one surface of the electrode assembly 100 facing the cap assembly 300 and connected to the second electrode terminal 340 of the cap assembly 300. The second electrode 120 and the second electrode terminal 340 may be electrically connected through the second electrode tab 121.

The cap assembly 300 may seal the one opening of the receiving can 200. The cap assembly 300 may cover the one opening of the receiving can 200 to seal the electrode assembly 100 from the outside.

The cap plate 310 of the cap assembly 300 may be coupled to be in contact with the upper terminal of the side wall of the receiving can 200. As described above, the cap plate 310 and the receiving can 200 may include the same material, and depending on the material, the cap plate 310 and the receiving can 200 may be joined by heat fusing or metal bonding.

As described above, the secondary battery 1 according to one or more embodiments of the present invention may prevent a short circuit phenomenon between the first electrode 110 and the second electrode 120 connected to each other by allowing the first electrode terminal 330 and the second electrode terminal 340, which are included in the cap assembly 300, to be spaced apart from each other.

A secondary battery 1 according to some embodiments of the present invention may change the material of a receiving can 200 and a cap plate, which seals the receiving can 200 as the cap assembly 300 includes a first electrode terminal 330 and a second electrode terminal 340.

A secondary battery 1 according to some embodiments of the present invention may form a receiving can 200 and a cap plate 310 using a non-metallic material having high strength, heat resistance, and chemical resistance.

A secondary battery 1 according to some embodiments of the present invention may prevent the risk of the electrode assembly 100 accommodated inside the receiving can 200 from being damaged by welding by joining the receiving can 200 made of a non-metallic material with the cap plate 310 by a heat-curing method rather than welding.

A coin-type or button-type battery includes a receiving can for accommodating an electrode assembly having a jelly roll shape, and a cap assembly bonded to the upper portion of the receiving can to seal the electrode assembly from the outside.

In evaluating the high temperature and high humidity resistance of coin-type or button-type batteries, a short circuit phenomenon due to moisture may occur between the cap plate and the terminal plate depending on the arrangement of the cap insulating layer, which may pose a safety issue for the battery.

According to some embodiments of the present invention, a short circuit phenomenon between a first electrode and a second electrode may be prevented by allowing a first electrode terminal (negative electrode terminal) and a second electrode terminal (positive electrode terminal), which included in the cap assembly, to be disposed to be spaced apart from each other.

According to some embodiments of the present invention, a cap assembly may change the material of a receiving can and a cap plate that seals the receiving can by including a first electrode terminal and a second electrode terminal.

According to some embodiments of the present invention, a receiving can and a cap plate may be formed of a non-metallic material having high strength, heat resistance, and chemical resistance.

According to some embodiments of the present invention, a non-metallic receiving can and a cap plate are joined to each other by a heat-curing method rather than welding, thereby preventing the risk of the electrode assembly received inside the receiving can from being damaged by welding.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A secondary battery (1), comprising:
an electrode assembly (100) including a first electrode (110), a second electrode (120), a separator (130) between the first electrode (110) and the second electrode (120), a first electrode tab (111) connected to the first electrode (110), and a second electrode tab (121) connected to the second electrode (120);
a receiving can (200) accommodating the electrode assembly (100), the receiving can (200) having one opening; and
a cap assembly (300) sealing the one opening of the receiving can (200), the cap assembly (300) including a first electrode terminal (330) connected to the first electrode tab (111) and a second electrode terminal (340) connected to the second electrode tab (121),
wherein the cap assembly (300) includes a cap plate (310) including a first terminal hole (311) through which the first electrode terminal (330) is exposed to the outside, and a second terminal hole (312) through which the second electrode terminal (340) is exposed to the outside.

2. The secondary battery (1) according to claim 1, wherein:
the cap assembly (300) includes a cap insulating layer (320) including a first through hole (321) corresponding to the first terminal hole (311) and a second through hole (322) corresponding to the second terminal hole (312), and insulating a space between the first electrode terminal (330) and the second electrode terminal (340) and the cap plate (310), and
the first electrode terminal (330) is exposed through the first terminal hole (311) and the first through hole (321), and the second electrode terminal (340) is exposed through the second terminal hole (312) and the second through hole (322).

3. The secondary battery (1) according to claim 1 or 2, wherein the first electrode terminal (330) and the second electrode terminal (340) are spaced apart from each other.

4. The secondary battery (1) according to any of claims 1 to 3, wherein the first electrode terminal (330) includes:
a bottom portion (331) connected to the first electrode tab (111); and
a terminal portion (332) protruding from the bottom portion (331) and exposed through the first terminal hole (311) and the first through hole (321), and
wherein the second electrode terminal (340) includes:
a bottom portion (341) connected to the second electrode tab (121); and
a terminal portion (342) protruding from the bottom portion (341) and exposed through the second terminal hole (312) and the second through hole (322).

5. The secondary battery (1) according to any of claims 2 to 4, wherein:
a recessed area (321a) having a step around the first through hole (321) and a recessed area (322a) having a step around the second through hole (322) are in the cap insulating layer (320),
a bottom portion (331) of the first electrode terminal (330) is in contact with the recessed area (321a) around the first through hole (321), and
a bottom portion (341) of the second electrode terminal (340) is in contact with the recessed area (322a) around the second through hole (322).

6. The secondary battery (1) according to any of claims 1 to 5, wherein the receiving can (200) and the cap plate (310) are electrically insulated from the first electrode (110) and the second electrode (120).

7. The secondary battery (1) according to any of claims 1 to 6, wherein the receiving can (200) and the cap plate (310) include a same material.

8. The secondary battery (1) according to any of claims 1 to 7, wherein the receiving can (200) and the cap plate (310) include a polymer material.

9. The secondary battery (1) according to any of claims 1 to 8, wherein the receiving can (200) and the cap plate (310) are heat-fusion connected.

10. The secondary battery (1) according to any of claims 1 to 9, wherein the receiving can (200) and the cap plate (310) include a metal material.

11. The secondary battery (1) according to any of claims 1 to 11, wherein the receiving can (200) and the cap plate (310) are metal-bonding connected.

12. The secondary battery (1) according to any of claims 1 to 11, further comprising a first insulating member (410) disposed to surround a bottom surface and a side surface of an inside of the receiving can (200).

13. The secondary battery (1) according to any of claims 1 to 12, further comprising a second insulating member (420) insulating the second electrode tab (121),
wherein the second electrode tab (121) is bent and connected to the second electrode terminal (340),
wherein a bent first side of the second electrode tab (121) is connected to the second electrode terminal (340), and
wherein a bent second side of the second electrode tab (121) is insulated from the first electrode by the second insulating member (420).

14. The secondary battery (1) according to any of claims 1 to 13, wherein the first electrode terminal (330) includes at least one of steel use stainless and nickel.

15. The secondary battery (1) according to any of claims 1 to 14, wherein the second electrode terminal (340) includes aluminum.
